# EUROPEAN PATENT APPLICATION

(11) **EP 4 375 733 A1**
(43) Date of publication of application: **29.05.2024**
(21) Application number: 23192924.1
(22) Date of filing: 23.08.2023
(51) Int. Cl.: G02B 30/40, G02B 30/56

(54) **TRANSPARENT DISPLAY-BASED IMAGE REPRODUCING APPARATUS USING STEREOSCOPIC EFFECT AND SHADING OF BACKGROUND**

(30) Priority: 23.11.2022 KR 20220157937
(71) Applicant: Kholo Inc., Iksan-si, Jeollabuk-do 54538 (KR)
(72) Inventor: KANG, Byung Soo, 05375 Seoul (KR)
(74) Representative: Viering, Jentschura & Partner mbB Patent- und Rechtsanwälte

(57) **Abstract**

The present disclosure relates to a transparent display-based image reproducing apparatus using a stereoscopic effect and shading of the background, including a transparent display for providing an image and a background disposed in the rear of the transparent display, wherein a high three-dimensional effect, a sense of perspective, and spatial sense of a transparent display-based image reproducing apparatus are provided by using the stereoscopic effect and shading imparted to the background.

In one embodiment, there is provided a transparent display-based image reproducing apparatus including: a housing which constitutes an outer shell and has an inner space formed therein, and at least one side surface of which is open; a frame which is formed on one open side surface of the housing to a predetermined thickness and defines an opening part; a transparent display which is disposed in the inner space of the housing and disposed on a rear surface of the frame; a background plate which is disposed on a rear surface of the transparent display and includes light-transmitting and light-diffusing functions; and a light source unit which is disposed on a rear surface of the background plate to irradiate light in the direction of the background plate and capable of independently adjusting light and shade, wherein the background plate forms a content background by including any one selected from the group consisting of a protrusion surface part having protrusions provided on the surface, a groove surface part having grooves provided on the surface, a fiber surface part having fibers attached to the surface thereof, a fabric surface part having fabrics attached to the surface thereof, a film surface part having a film attached to the surface thereof, a cilium surface part having cilia attached to the surface thereof, and combinations thereof.

## Description

### TECHNICAL FIELD

The present disclosure relates to a transparent display-based image reproducing apparatus using a stereoscopic effect and shading of the background.

### BACKGROUND

An image reproducing system using a transparent display has an effect in which an image reproduced on the transparent display appears to float in the air, and thus, compared to a stereoscopic imaging device having a complicated configuration, it may be possible to effectively give an observer a three-dimensional effect, a sense of perspective, and an augmented sense of reality. However, since the environment behind the transparent display is visible, the image displayed on the transparent display may appear blurry to the observer, and the environment behind the transparent display may interfere with the viewing of the image, making it difficult to feel the three-dimensional effect or concentrate on the image. Therefore, a controlled background is configured on the rear surface of the transparent display so that the three-dimensional effect is secured, and the clarity of the image displayed on the transparent display is secured.

However, in order to secure a three-dimensional effect and clarity as described above, the background on the rear surface of the transparent display had to be simply configured. Accordingly, there is a disadvantage in that the three-dimensional effect, sense of perspective, and augmented sense of reality of the image displayed on the transparent display are deteriorated or recognized monotonously since there is little change in the background according to the position or movement of the observer. In addition, the background of the rear surface, which is maintained regardless of the change of the image displayed on the display, has a disadvantage in that realistic liveliness is reduced.

Further, a conventional image reproducing apparatus using a transparent display has had a problem in that the three-dimensional effect, sense of perspective, and the like are remarkably deteriorated outdoors, even though a certain amount of three-dimensional effect and sense of perspective can be achieved indoors.

Accordingly, there is a need for an image reproducing apparatus capable of imparting a three-dimensional effect and liveliness without deteriorating the quality of an image displayed on a transparent display, and imparting a three-dimensional effect, a sense of perspective, liveliness, and an augmented sense of reality even outdoors.

### SUMMARY

The present disclosure is to solve the problems as described above, an object of the present disclosure is to achieve a transparent display-based image reproducing apparatus capable of imparting a three-dimensional effect and liveliness without deteriorating the quality of the image displayed on the transparent display while forming a background on the rear surface of the transparent display.

Another object of the present disclosure is to achieve an image reproducing apparatus capable of imparting a three-dimensional effect, a sense of perspective, liveliness, an augmented sense of reality without degrading the quality of the image displayed on the transparent display even outdoors while forming a background on the rear surface of the transparent display.

The present disclosure is to solve the above problems, and provides a transparent display-based image reproducing apparatus including: a housing which constitutes an outer shell and has an inner space formed therein, and at least one side surface of which is open; a frame which is formed on one open side surface of the housing to a predetermined thickness and defines an opening part; a transparent display which is disposed in the inner space of the housing and disposed on a rear surface of the frame; a background plate which is disposed on a rear surface of the transparent display and includes light-transmitting and light-diffusing functions; and a light source unit which is disposed on a rear surface of the background plate to irradiate light in the direction of the background plate and capable of independently adjusting light and shade, wherein the background plate forms a content background by including any one selected from the group consisting of a protrusion surface part having protrusions provided on the surface, a groove surface part having grooves provided on the surface, a fiber surface part having fibers attached to the surface thereof, a fabric surface part having fabrics attached to the surface thereof, a film surface part having a film attached to the surface thereof, a cilium surface part having cilia attached to the surface thereof, and combinations thereof.

As an example, a display-based image reproducing apparatus in which the outer side of the housing is applied with a low-reflection paint having low light reflectance, and the inner side of the housing has a white surface formed thereon so as to reflect white light, and is surface-treated to prevent an object attached to the inner side of the housing from being reflected.

As an example, a display-based image reproducing apparatus in which the transparent display has a low-reflection coating applied thereto may be provided.

As an example, a display-based image reproducing apparatus further including an electrochromic plate using a phenomenon in which color or light transmittance is reversibly changed by an electric field direction when a voltage is applied to at least one of the front and rear surfaces of the background plate may be provided.

As an example, a display-based image reproducing apparatus in which the film includes a three-dimensional film made of a light-transmitting material, and the three-dimensional film has adhesive performance capable of being attached to the background plate on one surface thereof, and has at least one of coating and irregularities of particles of various sizes formed on the other surface thereof may be provided.

According to one embodiment of the present disclosure, an observer can recognize changes in a three-dimensional effect and shading of the background, and thus a three-dimensional effect and liveliness of a transparent display image can be secured.

Further, according to one embodiment of the present disclosure, the quality of the transparent display image can be maintained even when changes in the three-dimensional effect and shading of the background are imparted.

Further, according to one embodiment of the present disclosure, it is possible to secure a three-dimensional effect, a sense of perspective, liveliness, and an augmented sense of reality without degrading the quality of the image displayed on the transparent display even outdoors.

### BRIEF DESCRIPTION OF THE DRAWINGS

FIGS. 1 and 2 show transparent display-based image reproducing apparatuses according to respective embodiments of the present disclosure.
FIGS. 3 to 5 show background plates according to the respective embodiments.

### DETAILED DESCRIPTION

Hereinafter, embodiments of the present disclosure are described in detail. However, the present disclosure is not limited to the embodiments disclosed below, but may be implemented in various different forms, and only this embodiment is provided to complete the disclosure of the present disclosure and to more completely inform those skilled in the art of the contents of the present disclosure.

In this specification, when one element is referred to as being located 'above' or 'below' another element, this includes both of a meaning that the one element is located directly 'above' or 'below' another element, and a meaning that an additional element may be interposed between those elements. In this specification, the term 'upper' or 'lower' is a relative concept set from the observer's point of view, and when the observer's point of view changes, 'upper' may also mean 'lower', and 'lower' may also mean 'upper'.

In a plurality of drawings, the same reference numerals refer to substantially the same elements. In addition, terms such as 'include' or 'have' are intended to designate that the described feature, number, step, operation, component, part, or combination thereof exists, but it should be understood that it does not preclude the possibility of the existence or addition of one or more other features, numbers, steps, operations, components, parts, or combinations thereof.

In describing the embodiments of the present disclosure, terms are terms defined in consideration of functions in the embodiments of the present disclosure, which may vary according to the intention or custom of a user or operator. Therefore, the definition should be made based on the contents throughout this specification.

Meanwhile, the 'front surface' referred to in the present disclosure refers to the surface adjacent to the observer on one plate including both surfaces, and the 'rear surface' refers to the surface far from the observer on one plate including both surfaces.

Meanwhile, the three-dimensional effect and liveliness referred to in the present disclosure are what an observer feels about content implemented through a transparent display, and include all concepts of three-dimensional effect, sense of perspective, liveliness, and an augmented sense of reality.

Meanwhile, the 'content background' referred to in the present disclosure is implemented as a background of the main content implemented through a transparent display, and includes all of the 'content background' that the observer can or cannot directly recognize, but includes patterns, pictures, images, etc. that impart an effect that allows the observer to feel a three-dimensional effect on the main content.

Hereinafter, it will be described in detail with reference to drawings.

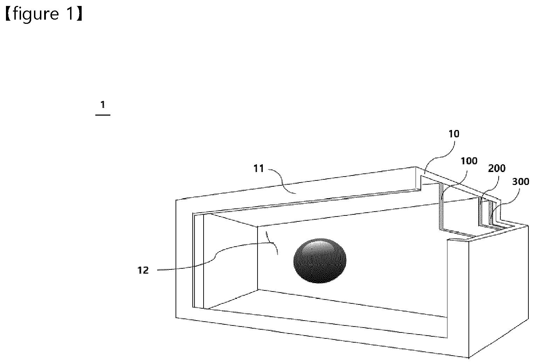

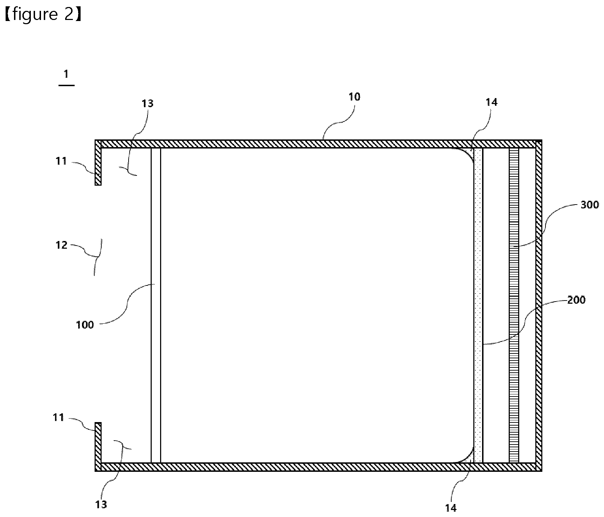

FIGS. 1 and 2 show transparent display-based image reproducing apparatuses according to the respective embodiments.

Referring to FIGS. 1 and 2, a transparent display-based image reproducing apparatus 1 may include a housing 10 constituting an outer shell, a transparent display 100 located inside the housing 10, a background plate 200, and a light source unit 300.

The housing 10 may be formed in various three-dimensional forms, and an inner space capable of accommodating the transparent display 100, the background plate 200, and the light source unit 300 may be formed. For example, the housing 10 may be formed in a rectangular parallelepiped, but a rectangular parallelepiped space may be formed therein so that the transparent display 100 in the form of a rectangular parallelepiped thin plate, the background plate 200, and the light source unit 300 are accommodated. However, the shape of the housing 10 may be appropriately modified according to the forms of the transparent display 100, the background plate 200, and the light source unit 300.

The transparent display 100 inside the housing 10, the background plate 200 on the rear surface of the transparent display 100, and the light source unit 300 on the rear surface of the background plate 200 are sequentially arranged at predetermined intervals.

For example, one surface of the housing 10 located on the front surface of the transparent display 100 is opened, and the front surface of the transparent display 100 may be observed from the outside of the housing 10. In particular, an opening part 12 may be defined by a frame 11 formed to a predetermined thickness along the edge of the housing 10 open to the front surface of the transparent display 100. At this time, the size of the opening part 12 may be formed to be smaller than the inner side of the housing 10 and the area of the transparent display 100.

For example, the thickness of the frame 11 is formed to a thickness that does not excessively disturb the image displayed on the transparent display 100, and thus the opening part 12 is defined, but the form of the opening part 12 may be formed in various forms such as a rectangle, a rectangle with rounded corners, a circle, and a polygon, but the form is not limited thereto.

The frame 11 and the transparent display 100 do not come into close contact and are separated by a predetermined distance so that a separation space (13 in FIG. 2) may be defined. Accordingly, when an observer observes the transparent display 100 through the opening part 12 of the frame 11, the boundary line where the outer shell of the transparent display 100 and the inner side of the housing 10 meet is hidden from the observer so that the effect of the screen floating on the transparent display 100 becomes noticeable, and thus a three-dimensional effect and an augmented sense of reality may be enhanced.

The outer side of the housing 10 may have a dark colored surface so as not to be noticed by an observer, and for example, a low-reflection paint having a low light reflectance may be applied. For example, the low-reflection paint may include a paint showing a low reflectance of 5% or less in a wide range of wavelengths from 380 nm to 780 nm, and a commercial product may generally include paints to which synthetic resins such as Orient Japan's MUSOU BLACK PAINT, Culturehustle's BLACK 2.0 and BLACK 3.0, Surrey Nanosystems' Vantablack, etc., iron black, carbon black, titanium black, carbon nanotubes, etc. are applied, but the present disclosure is not limited thereto.

In addition, the inner side of the housing 10 may have a white surface so as to reflect white light generated from the light source unit 300 well, but may be surface-treated so that an object described later is not reflected. For example, fine particles may be dispersed to increase the roughness of the surface, or treated to induce diffuse reflection and scattering through fine surface roughness processing, but the present disclosure is not limited thereto.

The outer side of the frame 11 may have a dark colored surface so as not to be noticed by an observer, and for example, a low-reflection paint having low light reflectance may be applied. In addition, various objects may be attached to the outer side and/or inner side of the frame 11. Accordingly, the boundary line of the transparent display 100 is covered so as not to be visible to the observer so that the floating effect of the screen displayed on the transparent display 100 is increased, and accordingly, the three-dimensional effect and augmented sense of reality are increased.

Various objects may be filled in the separation space (13 in FIG. 2) as long as they do not excessively obstruct observation of the transparent display 100. Accordingly, the boundary line of the transparent display 100 is covered so as not to be visible to the observer so that the floating effect of the screen displayed on the transparent display 100 is increased, and accordingly, the three-dimensional effect and augmented sense of reality are increased.

The transparent display 100 can express a color image, but a display capable of transmitting light can be applied so that the background plate 200 disposed behind the transparent display 100 can be well seen. For example, a transparent LCD, a transparent LED, a transparent OLED, a transparent HOE, etc. may be applied, but the present disclosure is not limited thereto. Preferably, a transparent LCD having excellent light transmittance and image sharpness may be applied, and a transparent LED advantageous for a large area may also be applied. In addition, the transparent display 100 may be treated with a low-reflection coating and/or attached with a low-reflection film so that external light entering from the front surface of the transparent display 100 is not reflected. At this time, the low-reflection coating and the low-reflection film may be generally applied to display materials. For example, anti reflection (AR) coating using destructive interference of light and/or anti glare (AG) coating using light scattering effect may be applied, and an AR coating-treated film or AG coating-treated film may be attached, but the present disclosure is not limited thereto. Accordingly, an observer observing the transparent display 100 can observe only the image displayed on the transparent display 100 without being disturbed by the light reflected on the transparent display 100 so that the three-dimensional effect and augmented sense of reality may be enhanced.

In addition, the transparent display 100 may be applied by placing one or more transparent displays side by side.

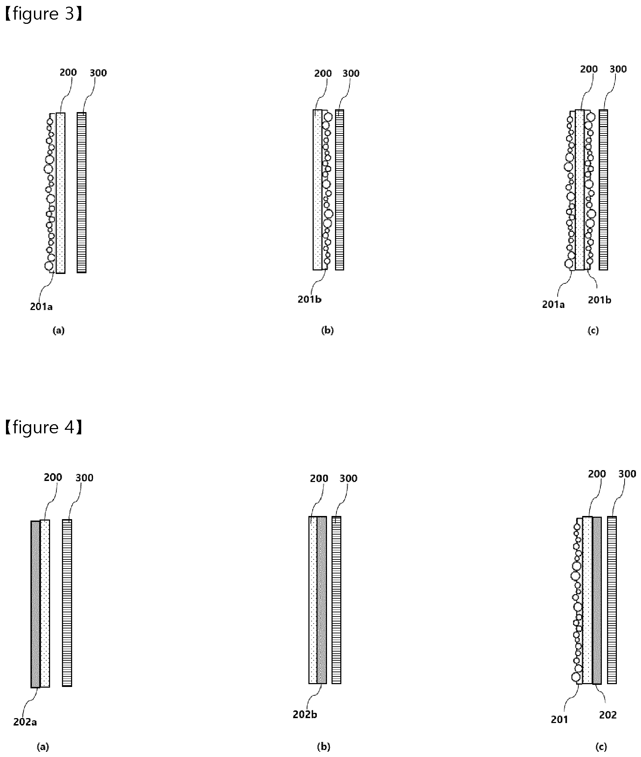

The background plate 200 may have a function of imparting a light diffusion effect so that the light source of the light source unit 300 disposed on the rear surface of the background plate 200 is not directly visible to the observer when the observer observes the transparent display 100. For example, a plate having a light diffusing function made of acrylic, PS, PC, PMMA, etc. applied to generally known display materials may be applied, but the present disclosure is not limited thereto. In addition, the surface of the background plate 200 may be processed, or attachments, functional plates, and the like may be added to impart a visual effect of the background plate 200 so that an observer observing the transparent display 100 may feel a three-dimensional effect and liveliness. For example, a surface-processed acrylic plate, PS plate, PC plate, PMMA plate, glass plate, and patterned glass plate may be applied, but the present disclosure is not limited thereto. This will be explained in detail through FIGS. 3 and 4.

In addition, the background plate 200 forms a background plate connection part (14 in FIG. 2) connected to the inner side of the housing 10, but the background plate connection part (14 in FIG. 2) may be formed to have a concavely continuous curvature so that it is difficult for an observer to recognize the background plate connection part (14 in FIG. 2) when observing the background plate 200 through the transparent display 100. In addition, the entire background plate 200 may be formed concavely in a curve or may form various curves, but the present disclosure is not limited thereto.

The light source unit 300 may include a light source irradiating light in the direction of the background plate 200. At this time, the light source can express white light and color. For example, the light source can express different colors by region and change color by region. In addition, a light source capable of surface light emission capable of uniformly emitting light to the entire surface of the light source unit 300 is applied, and a light source capable of adjusting light and shade by substrate in a plurality of substrates and/or independently for one substrate may be applied. For example, the light source unit 300 may independently adjust light and shade by region. For example, individual light sources constituting the light source unit 300 may be independently controlled to adjust light and shade. For example, the light source unit 300 may be applied with LED, Mini LED, Micro LED, OLED, etc., but the present disclosure is not limited thereto.

FIGS. 3 to 5 show background plates according to the respective embodiments.

Referring to FIG. 3A, a three-dimensional film 201a may be attached to the front surface of the background plate 200 disposed in front of the light source unit 300.

The three-dimensional film 201a may be a film having adhesive performance on one surface thereof so as to be attached to the background plate and having particles of various sizes applied on the other surface thereof, or having regular or irregular irregularities formed on the surface thereof. For example, a film applied with at least one of acrylic, PS, PC, PMMA, silica, and glass particles may be applied to the surface of the three-dimensional film 201a. For example, a hologram film to which interference fringes are applied may be applied to the three-dimensional film 201a. In addition to the above-described embodiment, the three-dimensional film 201a having excellent light transmittance and not causing discoloration of white light may be applied.

In the three-dimensional film 201a, differences between different diffusion effects and irregularity patterns by position may be imparted by having differences in particle size distributions on the surface of the film. For example, in the three-dimensional film 201a, a first region in which fine particles or fine irregularities are distributed, a second region in which coarse particles or coarse irregularities are distributed, and a third region in which particles or irregularities are not distributed may be distinguished from each other. For example, the first to third regions may be arranged by continuously or intermittently repeating one or more times. For example, patterns and pictures may be formed on the three-dimensional film 201a by the first to third regions. Accordingly, the observer may recognize the patterns and the pictures by feeling the difference in visual sensation. For example, the surface of the three-dimensional film 201a is treated so as to suppress light reflection so that light reflection on the surface of the background plate 200 may be suppressed. Accordingly, an observer observing the surface of the background plate 200 through the transparent display (100 in FIG. 2) may recognize the difference in various patterns and visual sensations of the background, and thus feel the three-dimensional effect and liveliness.

That is, when the three-dimensional film 201a according to the present disclosure is applied, light generated from the light source unit 300 passes through the background plate 200 and the three-dimensional film 201a so that the observer can recognize the background content implemented on the surface of the background plate 200 through the transparent display (100 in FIG. 2), for example, a specific pattern and/or picture, and thus the observer observing the surface of the background plate 200 through the transparent display (100 in FIG. 2) is able to recognize the difference in various patterns and visual sensations of the background, thereby improving the three-dimensional effect and liveliness of the content implemented on the transparent display 100.

Referring to FIG. 3B, a three-dimensional film 201b may be attached to the rear surface of the background plate 200 disposed in front of the light source unit 300.

The three-dimensional film 201b is attached to the rear surface of the background plate 200 so that it is possible to improve the three-dimensional effect and liveliness of the content implemented on the transparent display 100, and at the same time, the degree of concentration on the content implemented on the transparent display 100 can be improved by lowering the visual recognition effect of the irregularity patterns themselves to the observer compared to when the three-dimensional film 201a is attached to the front surface of the background plate 200 as shown in FIG. 3A.

Referring to FIG. 3C, three-dimensional films 201a and 201b may be attached to the front and rear surfaces of the background plate 200 disposed in front of the light source unit 300.

When the three-dimensional films 201a and 201b are attached to both of the front and rear surfaces of the background plate 200, a complex shape may be imparted and optical phenomena may be maximized. For example, the effect of light and shade may be maximized by adjusting the transmittance of light by classifying it by region. For example, regular patterns of the three-dimensional films 201a and 201b may be disposed to be overlapped to enable a moiré pattern to be formed. As an example, since a moiré pattern may be used according to the present embodiment so that the change in the pattern of the background according to the movement of the position of the observer is recognized, the three-dimensional effect and liveliness felt by the observer recognizing the background plate 200 may be further improved through the transparent display (100 in FIG. 2).

Referring to FIGS. 4A and 4B, electrochromic plates 202a and 202b may be attached to the front and/or rear surfaces of the background plate 200 disposed in front of the light source unit 300.

The electrochromic plates 202a and 202b applied to the present disclosure use a phenomenon in which color or light transmittance is reversibly changed by the direction of an electric field when a voltage is applied, and a material that can reversibly change the optical properties of the material by an electrochemical oxidation or reduction reaction may be applied. Accordingly, since color and/or light transmittance can be selectively adjusted by adjusting the applied voltage and current direction, the observer can recognize various differences in light and shade as light generated from the light source unit 300 passes through the electrochromic plates 202a and 202b. In addition, those which are capable of reversibly changing light characteristics in real time by voltage are applied as the electrochromic plates 202a and 202b applied to the present disclosure so that the three-dimensional effect and liveliness felt by an observer who recognizes the background plate 200 through the transparent display (100 in FIG. 2) may be improved.

Referring to FIG. 4C, a three-dimensional film 201 may be attached to the front surface of the background plate 200 disposed in front of the light source unit 300, and an electrochromic plate 202 may be attached to the rear surface thereof. Accordingly, since an observer observing the background plate 200 can recognize the difference in various patterns and visual sensations of the background, and differences in various light and shade and darkness and real-time changes may be felt at the same time so that the three-dimensional effect and liveliness felt can be greatly improved. In addition, the configuration opposite to that of FIG. 4C is possible, but it is preferable to attach the three-dimensional film 201 to the front surface of the background plate 200 and the electrochromic plate 202 to the rear surface of the background plate 200 for visual effect.

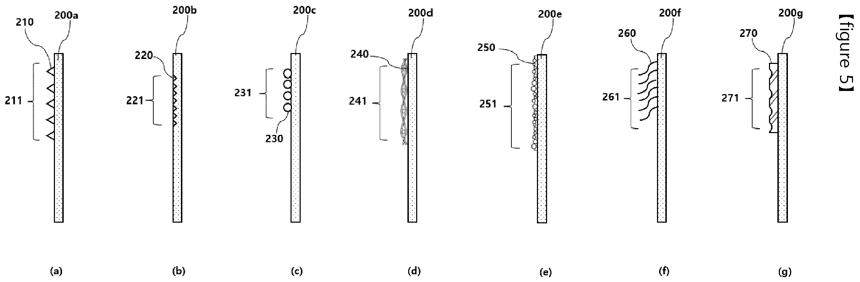

Referring to FIG. 5A, protrusions 210 may be formed on one surface of the background plate 200a.

The protrusions 210 are made of a light-transmitting material, and may be directly formed through a molding operation when the background plate 200a is manufactured, or may be separately attached to the background plate 200a. For example, they may be manufactured using a 3D printer, micro-pattern mold processing, compression roller processing, and chemical etching, but the present disclosure is not limited thereto. At this time, the protrusions 210 may be formed on the front surface and/or rear surface of the background plate 200a.

A protrusion surface part 211 formed by a plurality of protrusions 210 disposed on a predetermined area may be provided on the background plate 200a. At this time, various types of protrusion surface parts 211 may be formed on the background plate 200a by changing the shape and disposition interval of the protrusions 210. For example, a plurality of protrusion surface parts 211 may be formed on the background plate 200a so that various patterns and/or pictures using the difference in visual sensations may be recognized on the front surface of the transparent display 100.

Referring to FIG. 5B, grooves 220 may be formed on one surface of the background plate 200b.

The grooves 220 may be formed on the background plate 200b by methods such as laser etching, press processing, micro-pattern mold processing, compression roller processing, and chemical etching, but the present disclosure is not limited thereto. At this time, the grooves 210 may be formed on the front surface and/or rear surface of the background plate 200b.

A groove surface part 221 formed by a plurality of grooves 220 disposed on a predetermined area may be provided on the background plate 200b. At this time, various groove surface parts 221 may be formed on the background plate 200b by changing the shape and disposition interval of the grooves 220. Accordingly, a plurality of protrusion surface parts 211 are simultaneously formed on the background plate 200b so that various patterns and/or pictures using the difference in visual sensations may be recognized on the front surface of the transparent display 100.

Referring to FIG. 5C, a fiber 230 may be attached to one surface of the background plate 200c.

The fiber 230 may be made of a light-transmitting material, and an optical fiber made of at least one of nylon, PMMA, and glass may be applied, but the present disclosure is not limited thereto.

The fibers 230 may be separately attached to the background plate 200c. For example, the fibers 230 may be attached using an optically clear adhesive (OCA or OCR). For example, the optically clear adhesive may include at least one of an acrylic optically clear adhesive, an epoxy-based optically clear adhesive, a silicone-based optically clear adhesive, and a polyurethane-based optically clear adhesive, but the present disclosure is not limited thereto. At this time, the fiber 230 may be attached to the front surface and/or rear surface of the background plate 200c.

A fiber surface part 231 formed by a plurality of fibers 230 disposed on a predetermined area may be provided on the background plate 200c. At this time, various fiber surface parts 231 may be formed on the background plate 200c by changing the shape, thickness, disposition, and interval of the fibers 230. Accordingly, a plurality of fiber surface parts 231 may be simultaneously formed on the background plate 200c so that various patterns and/or pictures using the difference in visual sensations may be recognized on the front surface of the transparent display 100.

Referring to FIG. 5D, a fabric 240 may be attached to one surface of the background plate 200d.

The fabric 240 may be made of a light-transmitting material, and may be woven with an optical fiber made of glass, PMMA, or the like, but the present disclosure is not limited thereto.

The fabric 240 may be separately attached to the background plate 200d. For example, the fabric 240 may be attached using an optically clear adhesive (OCA or OCR). For example, the optically clear adhesive may include an acrylic optically clear adhesive, an epoxy-based optically clear adhesive, a silicone-based optically clear adhesive, and a polyurethane-based optically clear adhesive, but the present disclosure is not limited thereto. At this time, the fabric 240 may be attached to the front surface and/or rear surface of the background plate 200d.

A fabric surface part 241 formed by the fabric 240 attached to a predetermined area may be provided on the background plate 200d. At this time, various fabric surface parts 241 may be formed on the background plate 200d by changing the weave shape, thickness, and disposition of the fabric 230. Accordingly, a plurality of fabric surface parts 241 may be simultaneously formed on the background plate 200d so that various patterns and/or pictures using the difference in visual sensations may be recognized on the front surface of the transparent display 100.

Referring to FIG. 5E, a film 250 may be attached to one surface of the background plate 200e.

The film 250 may be made of a light-transmitting material, and for example, three-dimensional films (201a and 201b in FIG. 3) may be applied, but the present disclosure is not limited thereto. At this time, the film 250 may be attached to the front surface and/or rear surface of the background plate 200e.

A film surface part 251 formed by attaching a film 250 having a predetermined area may be provided on the background plate 200e. At this time, various film surface parts 251 may be formed on the background plate 200e by changing the shape, material, thickness, and disposition of the film 250. Accordingly, a plurality of film surface parts 251 may be simultaneously formed on the background plate 200d so that various patterns and/or pictures using the difference in visual sensations may be recognized on the front surface of the transparent display 100.

Referring to FIG. 5F, a cilia 260 may be attached to one surface of the background plate 200f.

The cilia 260 may be made of a light-transmitting material, and may be formed of, for example, an optical fiber made of nylon, PMMA, or the like, but the present disclosure is not limited thereto. At this time, the cilia 260 may be attached to the front surface and/or rear surface of the background plate 200f.

A cilium surface part 261 formed by attaching a cilia 260 having a predetermined area may be provided on the background plate 200f. At this time, various cilium surface parts 261 may be formed on the background plate 200f by changing the length, material, thickness, and disposition of the cilia 260. Accordingly, a plurality of cilium surface parts 261 may be simultaneously formed on the background plate 200f so that various patterns and/or pictures using the difference in visual sensations may be recognized on the front surface of the transparent display 100.

Referring to FIG. 5G, a three-dimensional glass 270 may be attached to one surface of the background plate 200g.

The three-dimensional glass 270 may be made of light-transmitting glass, and transparent or milky white glass may be applied to minimize the effect on the color of the screen of the transparent display (100 in FIG. 2).

In addition, irregularities and three-dimensional patterns may be formed on the surface of the three-dimensional glass 270 facing the transparent display (100 in FIG. 2).

In order to suppress a phenomenon in which external light is reflected from the surface of the three-dimensional glass 270 facing the transparent display (100 in FIG. 2), the three-dimensional glass 270 may be subjected to a surface treatment, a low-reflection coating treatment, and/or a low-reflection film may be attached thereto. For example, the three-dimensional glass 270 may be roughly treated to increase the surface roughness, and an AR coating and/or an AG coating, an AR film and/or an AG film may be attached thereto.

A glass surface part 271 formed by attaching the three-dimensional glass 270 to a predetermined area may be provided on the background plate 200g. At this time, various glass surface parts 271 may be formed on the background plate 200g by changing the length, material, thickness, glass surface treatment, glass pattern, and disposition of the three-dimensional glass 270. Accordingly, a plurality of glass surface parts 271 may be simultaneously formed on the background plate 200g so that various patterns and/or pictures using the difference in visual sensations may be recognized on the front surface of the transparent display 100.

The three-dimensional glass 270 may be attached to the background plate 200g using an adhesive. For example, the three-dimensional glass 270 may be attached using an optically clear adhesive (OCA or OCR). For example, the optically clear adhesive may include an acrylic optically clear adhesive, an epoxy-based optically clear adhesive, a silicone-based optically clear adhesive, and a polyurethane-based optically clear adhesive, but the present disclosure is not limited thereto.

One or more of the protrusion surface part 211, the groove surface part 221, the fiber surface part 231, the fabric surface part 241, the film surface part 251, the cilium surface part 261, and the glass surface part 271 disclosed in FIGS. 5A to 5G may be included in one background plate (200 in FIG. 2), and may be combined in various forms. For example, the protrusion surface part 211, the groove surface part 221, the fiber surface part 231, the fabric surface part 241, the film surface part 251, the cilium surface part 261, and the glass surface part 270 disclosed in FIGS. 5A to 5G may be combined with the embodiment described with reference to FIGS. 3 and 4. Accordingly, since various patterns and pictures can be formed using the difference in visual sensations, an observer who recognizes the background plate (200 in FIG. 2) through the transparent display (FIG. 2, 100) can feel a three-dimensional effect and liveliness.

As described above, the detailed description of the present disclosure has been made by the embodiments with reference to the accompanying drawings, but since the above-described embodiments have only been described as preferred examples of the present disclosure, it should not be understood that the present disclosure is limited only to the above embodiments, and the scope of rights of the present disclosure should be understood as the claims described later and equivalent concepts thereof.

For example, the drawings are schematically shown with each component as the main body to aid understanding, and the thickness, length, number, etc. of each component shown may differ from the actual one in the progress of drawing. In addition, the material, shape, dimensions, etc. of each component shown in the above embodiment are only examples and are not particularly limited, and various changes are possible within a range that does not substantially deviate from the effects of the present disclosure.

### [Description of reference numerals]

1: Transparent display-based image reproducing apparatus
10: Housing
11 : Frame
12: Opening part
13: Separation space
14: Background plate connection part
100: Transparent display
200: Background plate
201, 201a, 201b: Three-dimensional film
202, 202a, 202b: Electrochromic plate
210: Protrusions
211: Protrusion surface part
220: Grooves
221: Groove surface part
230: Fiber
231: Fiber surface part
240: Fabric
241: Fabric surface part
250: Film
251: Film surface part
260: Cilia
261: Cilium surface part
270: Three-dimensional glass
271: Glass surface part
300: Light source unit

## Claims

1. A transparent display-based image reproducing apparatus comprising:
a housing which constitutes an outer shell and has an inner space formed therein, and at least one side surface of which is open;
a frame which is formed on one open side surface of the housing to a predetermined thickness and defines an opening part;
a transparent display which is disposed in the inner space of the housing and disposed on a rear surface of the frame;
a background plate which is disposed on a rear surface of the transparent display and includes light-transmitting and light-diffusing functions; and
a light source unit which is disposed on a rear surface of the background plate to irradiate light in the direction of the background plate and capable of independently adjusting light and shade,
wherein the background plate forms a content background by including any one selected from the group consisting of a protrusion surface part having protrusions provided on the surface, a groove surface part having grooves provided on the surface, a fiber surface part having fibers attached to the surface thereof, a fabric surface part having fabrics attached to the surface thereof, a film surface part having a film attached to the surface thereof, a cilium surface part having cilia attached to the surface thereof, a glass surface part having a three-dimensional glass attached to the surface thereof, and combinations thereof.

2. The transparent display-based image reproducing apparatus of claim 1, wherein the outer side of the housing is applied with a low-reflection paint having low light reflectance, and the inner side of the housing has a white surface formed thereon so as to reflect white light, and is surface-treated to prevent an object attached to the inner side of the housing from being reflected.

3. The transparent display-based image reproducing apparatus of claim 1 or 2, wherein the transparent display has a low-reflection coating applied thereto.

4. The transparent display-based image reproducing apparatus of one of claims 1-3, further comprising an electrochromic plate using a phenomenon in which color or light transmittance is reversibly changed by an electric field direction when a voltage is applied to at least one of the front and rear surfaces of the background plate.

5. The transparent display-based image reproducing apparatus of one of claims 1-4, wherein the film includes a three-dimensional film made of a light-transmitting material, and the three-dimensional film has adhesive performance capable of being attached to the background plate on one surface thereof, and has at least one of coating and irregularities of particles of various sizes formed on the other surface thereof.

6. The transparent display-based image reproducing apparatus of one of claims 1-5, wherein the three-dimensional glass includes a light-transmitting glass, a three-dimensional pattern is formed on a surface facing the transparent display, and a low-reflection coating is applied to the surface.
